# FASCICULE DE BREVET EUROPEEN

(11) **EP 1 223 193 B1**
(45) Date de publication et mention de la délivrance du brevet: **16.01.2008**
(21) Numéro de dépôt: 02290047.6
(22) Date de dépôt: 10.01.2002
(51) Int. Cl.: C08L 83/04, H01B 3/46

(54) **Composition à base de caoutchouc silicone, résistante au déchirement, pour cables et pour accessoires d'énergie**
Reissfeste Silikonkautschukzusammensetzung für Energiekabel und Zubehör
Tear resistant silicone rubber compostion for cables and energy products

(30) Priorité: 11.01.2001 FR 0100309
(43) Date de publication de la demande: 17.07.2002
(73) Titulaire: Nexans, 75008 Paris (FR)
(72) Inventeur: Cottevieille, Denis, 93100 Montreuil Sous Bois (FR); Fomperie, Lionel, 78160 Auffargis (FR); Amigouet, Pascal, 91790 Boissy Saint Yon (FR)
(74) Mandataire: Feray, Valérie

(56) Documents cités:
- EP-A- 0 402 904
- EP-A- 0 420 031
- US-A- 3 969 308
- US-A- 4 234 702
- US-A- 4 341 675
- US-A- 4 550 056

## Description

La présente invention se rapporte aux compositions à base de caoutchouc silicone utilisées dans le domaine des câbles de télécommunications et d'énergie et des accessoires d'énergie.

Ces compositions sont déjà très largement utilisées en câblerie et pour la réalisation d'accessoires de câbles d'énergie, du fait notamment de leurs excellentes propriétés diélectriques, leur stabilité thermique aux basses et hautes températures, leur résistance aux conditions atmosphériques ou environnantes d'utilisation et leur élasticité.

Elles sont en général réticulées, en particulier par peroxyde et/ou un catalyseur de réticulation. Elles sont mises en oeuvre par extrusion ou par moulage.

Les compositions à base de caoutchouc silicone incorporent souvent une ou des charges aptes à améliorer l'une ou des propriétés spécifiques pour ainsi satisfaire des exigences particulières de conditions d'utilisation réelles ou possibles définies.

Ainsi par exemple, il est bien connu d'utiliser des compositions à base de caoutchouc silicone pour la réalisation d'accessoires de câbles moyenne, haute ou très haute tension, qui sont expansibles et rétractables élastiquement et ne nécessitent alors pas l'emploi de flamme pour leur mise en place sur les câbles.

Le document EP-A-0840422 notamment se rapporte à un accessoire de ce type, en particulier, à une terminaison extérieure de câble d'énergie ayant une résistance améliorée aux courants de cheminement et aux conditions atmosphériques. Il divulgue à cet effet que la terminaison est réalisée à base de caoutchouc silicone et est bicouche, avec des formulations différentes d'une couche à l'autre. Le caoutchouc silicone de la couche extérieure de cette terminaison extérieure est chargé de trihydrate d'alumine pour conférer la résistance aux courants de cheminement et aux conditions atmosphériques recherchée alors que ses propriétés élastiques sont ainsi rendues moindres. La couche intérieure est quant à elle en caoutchouc silicone sans la charge précitée, et est liée mécaniquement à la couche extérieure pour donner à elle seule ses propriétés élastiques requises à la terminaison.

De manière analogue, il est bien connu d'utiliser des caoutchoucs silicone pour la réalisation de couches d'isolation et /ou du gainage et/ou de bourrage de câbles d'énergie.

Le document FR-A-2450855 notamment divulgue une telle composition contenant une charge ignifugeante, en particulier une charge céramisable, pour l'obtention d'une résistance élevée au feu et à sa propagation.

Il est par ailleurs bien connu que les caoutchoucs ou élastomères silicones ont des propriétés physiques souvent insuffisantes, en particulier une résistance au déchirement relativement faible, qui sont améliorées en y incorporant une charge renforçante, en particulier de la silice colloïdale.

Le document US-A-3024126 divulgue une telle silice renforçante traitée par association d'un composé aminé et d'un composé organosilicique portant des groupements hydroxy ou alcoxy et ainsi incorporée à un élastomère silicone pour en améliorer les propriétés physiques.

Une telle amélioration des propriétés physiques des caoutchoucs silicones utilisés en câblerie et dans les accessoires d'énergie est d'autant plus nécessaire que ceux-ci doivent également contenir une charge non renforçante, telle que l'une de celles indiquées ci-avant pour l'obtention d'une résistance au feu ou d'une résistance au courant de cheminement et/ou aux conditions d'utilisation, qui peut alors conduire à une dégradation des propriétés physiques initiales. Une telle dégradation peut se traduire après moulage ou extrusion par un aspect de surface imparfait et une structure interne non homogène avec la présence possible de microbulles et fait que la résistance au déchirement n'est plus satisfaisante.

La présente invention a pour but de réaliser une composition à base de caoutchouc silicone ayant une résistance au déchirement améliorée.

Par ailleurs, l'ajout de charge non renforçante et/ou de charge renforçante peut conduire à une mise en oeuvre délicate et longue pour l'homogénéisation satisfaisante de l'ensemble des constituants de la composition.

La présente invention a avantageusement en outre pour but d'éviter les difficultés de mise en oeuvre.

Elle a pour objet une composition à base de caoutchouc silicone, résistante au déchirement, pour câbles et pour accessoires d'énergie, comportant :
- le caoutchouc silicone de base constitué par un organopolysiloxane,
- un premier agent de couplage compatible avec ledit organopolysiloxane et ayant des premiers groupements fonctionnels hydroxyles,
- un matériau polymère résistant au déchirement,
- un deuxième agent de couplage compatible avec ledit polymère et ayant des deuxièmes groupements fonctionnels aptes à réagir avec lesdits premiers groupements hydroxyles,
   et
- un agent et/ou catalyseur de réticulation.

Dans cette composition selon l'invention, les premier et deuxième agents de couplage sont compatibles l'un avec l'organopolysiloxane et l'autre avec ledit matériau polymère respectivement au sens où ces derniers ne dégradent pas les propriétés initiales l'un du caoutchouc silicone, l'autre du matériau polymère et garantissent une composition homogène après mélange.

La réaction chimique intervenant entre lesdits premiers et deuxièmes groupements fonctionnels desdits premier et deuxième agents de couplage, provoque un couplage physique entre ledit organopolysiloxane et le matériau polymère par des liens de diffusion, alors que ceux-ci sont en tant que tels naturellement incompatibles l'un avec l'autre. Ce couplage, n'impliquant pas de réaction chimique, peut être réalisé à des températures relativement basses de manière à ce que la réticulation ne se produise pas. Le mélange peut notamment être effectué au sein des machines classiques utilisées pour le moulage et l'extrusion. La composition est ensuite portée à la température de réticulation.

Le caoutchouc silicone de base peut être du type gomme élastomère (SR), vulcanisant à haute température (HTV) sous l'action d'un peroxyde, ou à température ambiante (RTV) soit sous l'action d'un silicate d 'alcoyle en présence d'un catalyseur organo-stanneux ou grâce à un catalyseur de réticulation en particulier à base de sel de platine. Il peut être en variante du type liquide (LSR) ou extra liquide (XLR) vulcanisant en général à chaud grâce à un catalyseur de réticulation en particulier à base de sel de platine.

De manière préférentielle, pour la réalisation d'accessoires de câbles d'énergie, tels que terminaisons extérieures ou même intérieures, joints ou isolateurs, le caoutchouc silicone choisi est un LSR de viscosité comprise entre 30 et 200 Pa.s. et plus précisément de l'ordre de 100 Pa.s. Pour des applications dans les câbles et notamment les câbles de sécurité résistant au feu, le caoutchouc silicone choisi est une gomme élastomère HTV, de viscosité comprise entre 100 et 10.000 Pa.s et de préférence de l'ordre de 6000 Pa.s.

Le matériau polymère de ladite composition est choisi parmi les matières plastiques ayant d'excellentes propriétés physiques et mécaniques. Il est de préférence choisi parmi les polymères et les copolymères d'éthylène, les polymères et les copolymères de propylène et les différents mélanges de ceux-ci.

Selon une caractéristique additionnelle de la composition, ledit premier agent de couplage est une huile silicone hydroxylée et ledit deuxième agent de couplage est un composé dont lesdits deuxièmes groupements fonctionnels sont choisis dans les groupes des stéarates, des amines, des alcools, des carboxyliques et des carboxylates.

En particulier, l'huile silicone hydroxylée a une teneur de groupements hydroxyles qui est avantageusement comprise entre 0,01 et 4 % et est de préférence de l'ordre de 0,08%.

Selon une autre caractéristique supplémentaire, la composition contient une charge apte à conférer une propriété additionnelle spécifique prédéterminée, pour des conditions d'utilisation données.

Ces charges sont notamment les charges ignifugeantes et en particulier céramisables, en tant que telles bien connues pour les câbles dits de sécurité, ou celles en tant que telles également bien connues et utilisées pour améliorer une propriété prédéterminée souhaitée, par exemple une résistance prédéterminée au courant de cheminement et aux conditions environnantes pour les terminaisons extérieures et les isolateurs notamment.

En particulier, la composition selon l'invention contient, pour 100 parties en poids dudit organopolysiloxane, de 0,5 à 50 parties en poids dudit matériau polymèrique, de 0,5 à 20 parties en poids dudit premier agent de couplage et de 0,5 à 20 parties en poids dudit deuxième agent de couplage.

Bien entendu ladite composition peut également contenir des additifs utilisés couramment, tels que des anti-oxydants, des stabilisants, des pigments, des charges semi-conductrices, notamment.

La présente invention propose également un câble de télécommunications ou d'énergie comportant une couche de gainage et/ou une couche d'isolation et/ou une couche de bourrage constituée(s) de la composition décrite précédemment.

La présente invention propose aussi un accessoire d'énergie comportant une couche constituée de la composition décrite précédemment.

Des exemples de formulation de la composition conforme à l'invention et non chargée sont indiqués ci-après en regard de ses constituants principaux, avec la résistance au déchirement déterminée selon la norme ASTM D 624 Die T d'échantillons ainsi obtenus, en comparaison avec la résistance au déchirement déterminée selon la même norme d'échantillons réalisés en caoutchouc silicone de base utilisé.

Dans les figures suivantes :
- la Figure 1 montre une vue schématique de côté d'un câble d'énergie comportant selon un mode de réalisation préféré une couche de gainage constituée d'une composition selon l'invention,
- la Figure 2 montre une vue schématique de côté d'une jonction de câbles d'énergie comportant selon un mode de réalisation préféré une couche extérieure constituée d'une composition selon l'invention.

### Exemple 1 (comparatif)

LSR référence 1551/100P de Dow Corning
Résistance au déchirement : 5,1 N/mm

### Exemple 2

| | |
|---|---|
| LSR, référence 1551/100P de Dow Corning: | 100 parts en poids |
| PE, réf. Icorene MP 650-50 de Ico Polymers: | 2 parts en poids |
| Ethylène glycol: | 1 part en poids |
| Huile SIOH, réf. PS 343.8 de Degussa Hüls: | 0,3 part en poids |
| Résistance au déchirement: | 6,8 N/mm |

### Exemple 3 (comparatif)

| | |
|---|---|
| SR HTV, réf. Elastosil R420/70 de Wacker: | 100 parts en poids |
| Peroxyde dicumyl: | 1,1 part en poids |
| Résistance au déchirement: | 5 N/mm |

### Exemple 4

| | |
|---|---|
| SRHTV, réf Elastosil R420/70 de Wacker: | 150 parts en poids |
| LLDPE, réf.Fusabond MB 226D de Dupont de Nemours: | 20 parts en poids |
| Huile SiOH, réf. PS 343.8 de Degussa Hüls: | 6 parts en poids |
| Ethylène glycol: | 10 parts en poids |
| Peroxyde dicumyle: | 1,1 part en poids |

| | |
|---|---|
| Résistance au déchirement: | 17,5 N/mm |

### Exemple 5

Il diffère de l'exemple 4, en ce que 10 parts de stéarate de magnésium ont été utilisées au lieu des 10 parts d'éthylène glycol.

| | |
|---|---|
| Résistance au déchirement: | 12,6 N/mm |

### Exemple 6

Il diffère de l'exemple 4, en ce que 10 parts de n butyl trimethoxysilane ont été utilisées au lieu des 10 parts d'éthylène glycol.

| | |
|---|---|
| Résistance au déchirement: | 16,6 N/mm |

Le mélange des différents constituants de la composition est réalisé jusqu' à homogénéisation selon une séquence choisie de manière à ce que la réticulation ne se produise pas, et est alors porté à la température de réticulation.
Sa mise en oeuvre est rapide et aisée sur des machines classiques utilisées pour le moulage et l'extrusion, que la composition soit ou non chargée.

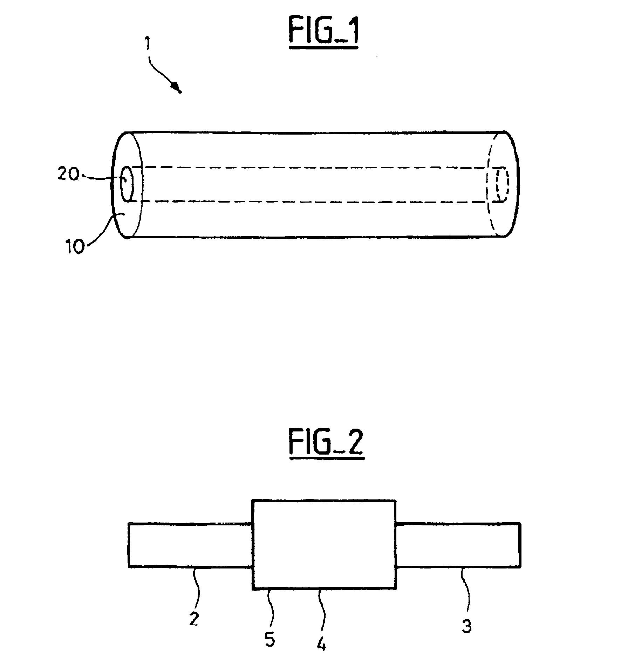

La Figure 1 montre une vue schématique de côté d'un câble d'énergie 1 comportant selon un mode de réalisation préféré une couche de gainage 10 constituée d'une composition selon l'invention et entourant le coeur 20 du câble 1.

La Figure 2 montre une vue schématique de côté d'une jonction de câbles 4 raccordant deux câbles d'énergie 2, 3 et comportant selon un mode de réalisation préféré une couche extérieure 5 constituée d'une composition selon l'invention.

L'invention s'applique également aux câbles de télécommunications.

## Revendications

1. Composition à base de caoutchouc silicone, résistante au déchirement, pour câbles et pour accessoires d'énergie, comportant :
- le caoutchouc silicone de base constitué par un organopolysiloxane,
- un premier agent de couplage compatible avec ledit organopolysiloxane, ayant des premiers groupements fonctionnels hydroxyles, et lié audit organopolysiloxane par liens de diffusion.
- un matériau polymère résistant au déchirement naturellement incompatible avec ledit organopolysiloxane,
- un deuxième agent de couplage, distinct dudit premier agent de couplage, compatible avec ledit polymère, ayant des deuxièmes groupements fonctionnels aptes à réagir avec lesdits premiers groupements hydroxyles, et lié audit polymère par liens de diffusion, de manière à former un couplage physique entre ledit organopolysiloxane et ledit matériau polymère par liens de diffusion
et
- un agent et/ou catalyseur de réticulation.

2. Composition selon la revendication 1, **caractérisée en ce que** ledit matériau polymère est choisi parmi les polymères et les copolymères d'éthylène, les polymères et les copolymères de propylène et leurs différents mélanges.

3. Composition selon l'une des revendications 1 et 2, **caractérisée en ce que** ledit premier agent de couplage est une huile silicone hydroxylée et ledit deuxième agent de couplage est un composé dont lesdits deuxièmes groupements fonctionnels sont choisis dans les groupes des stéarates, des amines, des alcools, des carboxyliques et des carboxylates.

4. Composition selon l'une des revendications 1 à 3, **caractérisée en ce qu**'elle contient, pour 100 parties en poids dudit organopolysiloxane, de 0,5 à 50 parties en poids dudit matériau polymérique, de 0,5 à 20 parties en poids dudit premier agent de couplage et de 0,5 à 20 parties en poids dudit deuxième agent de couplage.

5. Composition selon l'une des revendications 1 à 4, **caractérisée en ce qu**'elle comporte en outre une charge apte à conférer une propriété additionnelle spécifique prédéterminée, pour des conditions d'utilisation données.

6. Composition selon la revendication 5, **caractérisée en ce que** ladite charge est choisie parmi les charges ignifugeantes et celles céramisables, améliorant la résistance au feu et/ou à la propagation du feu de la composition, et parmi les charges améliorant la résistance au courant de cheminement et aux conditions atmosphériques environnantes.

7. Câble comportant une couche de gainage et/ou une couche d'isolation et/ou une couche de bourrage constituée(s) de la composition selon l'une des revendications 1 à 6.

8. Accessoire pour câble de transport d'énergie comportant une couche constituée de la composition selon l'une des revendications 1 à 6.

## Claims

1. A tear-resistant composition based on silicon rubber for cables and for power accessories, including:
- the silicon base rubber formed by an organopolysiloxane,
- a first coupling agent compatible with said organopolysiloxane, having first hydroxyl functional groups and bound to said organopolysiloxane by diffusion bonds,
- a tear-resistant polymer material naturally incompatible with said organopolysiloxane,
- a second coupling agent, distinct from said first coupling agent, compatible with said polymer, having second functional groups capable of reacting with said first hydroxyl groups, and bound to said polymer by diffusion bonds, so as to form a physical coupling between said organopolysiloxane and said polymer material by diffusion bonds, and
- a cross-linking agent and/or catalyst.

2. The composition according to claim 1, **characterized in that** said polymer material is selected from polymers and copolymers of ethylene, polymers and copolymers of propylene and various mixtures thereof.

3. The composition according to any of claims 1 and 2, **characterized in that** said first coupling agent is a hydroxylated silicone oil and said second coupling agent is a compound for which said second functional groups are selected from stearate, amine, alcohol, carboxylic and carboxylate groups.

4. The composition according to any of claims 1 to 3, **characterized in that** it contains for 100 parts by weight of said organopolysiloxane, from 0.5 to 50 parts by weight of said polymeric material, from 0.5 to 20 parts by weight of said first coupling agent and from 0.5 to 20 parts by weight of said second coupling agent.

5. The composition according to any of claims 1 to 4, **characterized in that** it further includes a filler capable of imparting a predetermined specific additional property for given conditions of use.

6. The composition according to claim 5, **characterized in that** said filler is selected from flame-retardant fillers and ceramizable ones, improving the resistance of the composition to fire and/or to propagation of fire, and from fillers improving current tracking resistance and resistance to surrounding atmospheric conditions.

7. A cable including a cladding layer and/or an insulation layer and/or a packing layer consisting of the composition according to any of claims 1t o 6.

8. An accessory for a cable for transporting power including a layer consisting of the composition according to any of claims 1 to 6.

## Patentansprüche

1. Reißfeste Zusammensetzung auf der Basis von Silikonkautschuk für Energiekabel und -zubehör, umfassend:
- den Basis-Silikonkautschuk, gebildet von einem Organopolysiloxan,
- ein erstes Kopplungsmittel, das mit besagtem Organopolysiloxan kompatibel ist und erste funktionelle Hydroxylgruppen hat und mit dem besagten Organopolysiloxan durch Diffusionsbindungen verbunden ist,
- ein reißfestes Polymermaterial, das natürlich mit dem besagten Organopolysiloxan inkompatibel ist,
- ein zweites Kopplungsmittel, das sich von dem ersten Kopplungsmittel unterscheidet, das mit dem besagten Polymer kompatibel ist und zweite funktionelle Gruppen hat, die imstande sind, mit den ersten Hydroxylgruppen zu reagieren, und mit dem besagten Polymer durch Diffusionsbindungen verbunden ist, um eine physische Kopplung zwischen dem besagten Organopolysiloxan und dem besagten Polymer durch Diffusionsbindungen auszubilden,
und
- ein Vernetzungsmittel und/oder -katalysator.

2. Zusammensetzung nach Anspruch 1, **dadurch gekennzeichnet, dass** das besagte Polymermaterial ausgewählt ist aus den Polymeren und Copolymeren des Ethylens, den Polymeren und Copolymeren des Propylens und ihren verschiedenen Gemischen.

3. Zusammensetzung nach einem der Ansprüche 1 und 2, **dadurch gekennzeichnet, dass** das besagte erste Kopplungsmittel ein hydroxyliertes Silikonöl und das besagte zweite Kopplungsmittel eine Verbindung ist, deren zweite funktionelle Gruppen aus den Gruppen der Stearate, der Amine, der Alkohole, der Carboxyle und der Carboxylate ausgewählt sind.

4. Zusammensetzung nach einem der Ansprüche 1 bis 3, **dadurch gekennzeichnet, dass** sie für 100 Gewichtsteile des besagten Organopolysilosans von 0,5 bis 50 Gewichtsteile des besagten Polymermaterials, von 0,5 bis 20 Gewichtsteile des besagten ersten Kopplungsmittels und von 0,5 bis 20 Gewichtsteile des besagten zweiten Kopplungsmittels enthält.

5. Zusammensetzung nach einem der Ansprüche 1 bis 4, **dadurch gekennzeichnet, dass** sie weiterhin eine Charge umfasst, die imstande ist, für gegebene Nutzungsbedingungen eine spezielle vorbestimmte zusätzliche Eigenschaft zu verleihen.

6. Zusammensetzung nach Anspruch 5, **dadurch gekennzeichnet, dass** die besagte Charge ausgewählt ist aus den flammwidrigen Chargen und den keramisierbaren, die Feuerfestigkeit und/oder die Festigkeit gegenüber der Ausbreitung von Feuer der Zusammensetzung verbessernd, und aus den Chargen, die die Widerstandsfähigkeit gegenüber dem Kriechstrom und den atmosphärischen Umweltbedingungen verbessern.

7. Kabel, eine Mantelschicht und/oder eine Isolierschicht und/oder eine Füllschicht umfassend, die von der Zusammensetzung nach einem der Ansprüche 1 bis 6 gebildet wird/werden.

8. Zubehör für Kabel zum Energietransport, eine Schicht umfassend, die von der Zusammensetzung nach einem der Ansprüche 1 bis 6 gebildet wird.
